## Europäisches Patentamt

## European Patent Office

## Office européen des brevets

(11) Veröffentlichungsnummer: **0 044 473**
**B1**

(12)

# EUROPÄISCHE PATENTSCHRIFT

(45) Veröffentlichungstag der Patentschrift:
28.09.83

(51) Int. Cl.³: **B 65 G 47/76**

(21) Anmeldenummer: 81105323.0

(22) Anmeldetag: 09.07.81

(54) Pralleinrichtung für das Abwurfende von Bandförderern, Plattenförderern oder dgl.

(30) Priorität: 23.07.80 DE 3027837

(43) Veröffentlichungstag der Anmeldung:
27.01.82 Patentblatt 82/4

(45) Bekanntmachung des Hinweises auf die Patenterteilung:
28.09.83 Patentblatt 83/39

(84) Benannte Vertragsstaaten:
BE DE FR GB LU NL

(56) Entgegenhaltungen:
DE-A-2 834 004

(73) Patentinhaber: Krupp-Koppers GmbH, Moltkestrasse 29,
D-4300 Essen 1 (DE)

(72) Erfinder: Becker, Theodor, Borkumstrasse 8,
D-4300 Essen 1 (DE)

BUNDESDRUCKEREI BERLIN

Pralleinrichtung für das Abwurfende von Bandförderern, Plattenförderern oder dgl.

Die Erfindung betrifft eine Pralleinrichtung für das Abwurfende von Bandförderern, Plattenförderern oder dgl., bestehend aus einer senkrecht oder geneigt angeordneten, vom Fördergut beaufschlagten metallischen Platte.

Diese metallische Platte unterliegt erfahrungsgemäß einem vergleichsweise starken Verschleiß, der insbesondere auf dem normalerweise kleinen Anstrahlwinkel des Fördergutes zur Platte beruht und überdies selbstverständlich von der Art des Fördergutes abhängt. So wurde festgestellt, daß die Platten an den Abwurfenden von Eisenerz-Mischgut transportierenden Bandförderern in Sinteranlagen bereits nach kurzer Betriebszeit wegen Verschleißes ausgewechselt werden mußten.

Der Erfindung liegt daher die Aufgabe zugrunde, eine Pralleinrichtung der eingangs genannten Art so auszubilden, daß eine erhebliche Verminderung der Verschleißerscheinungen erzielt wird.

Zur Lösung dieser Aufgabe schlägt die Erfindung vor, daß auf der Platte eine Vielzahl von zum Fördergut weisenden Bolzen befestigt und derart angeordnet ist, daß die Räume zwischen den Bolzen durch anbackendes und verfestigendes Fördergut ausgefüllt werden können. Diese Bolzen sind vorzugsweise in gegeneinander versetzten Reihen angeordnet.

Die Erfindung schlägt ferner vor, daß ein im wesentlichen horizontal angeordnetes, zum Fördergut weisendes Flacheisen, Winkeleisen oder dgl. als unterer Abschluß der Platte vorgesehen ist.

Es hat sich gezeigt, daß bei der erfindungsgemäß ausgebildeten Pralleinrichtung die Räume zwischen den Bolzen durch anbackendes und verfestigendes Fördergut ausgefüllt werden, das somit den eigentlichen Schleiß-Schutz bildet. Es konnten hiermit, wie im Betrieb bei einer Sinteranlage ausgewiesen wurde, Standzeiten erreicht werden, die ein Mehrfaches der bekannter Pralleinrichtungen betragen.

Die Erfindung ist in der Zeichnung beispielsweise veranschaulicht. Es zeigt

Fig. 1 eine Seitenansicht des Abwurfendes eines Bandförderers und

Fig. 2 einen Schnitt nach der Linie II-II der Fig. 1.

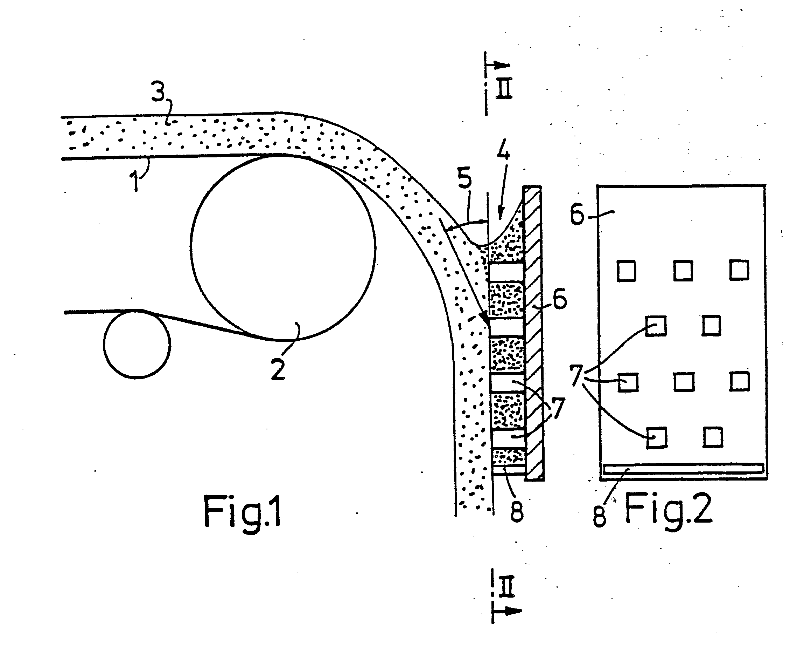

In Fig. 1 ist mit 1 der Bandförderer bezeichnet, dessen Abwurfende von der Umlenktrommel 2 gebildet wird. 3 ist das Fördergut, das im Bereich der Umlenktrommel etwa in der dargestellten Strömungsrichtung den Bandförderer verläßt und auf die als Ganzes mit 4 bezeichnete Pralleinrichtung trifft. Der Anstrahlwinkel 5 des Fördergutes zur Pralleinrichtung ist, wie aus der Zeichnung ersichtlich, vergleichsweise klein.

Die Pralleinrichtung besteht im vorliegenden Fall aus einer senkrecht angeordneten Platte 6, deren Befestigung bzw. Lagerung hier nicht dargestellt ist. Auf dieser Platte ist zum Fördergut 3 hin eine Vielzahl von Bolzen 7 gleicher Länge in geeigneter Weise befestigt, vorzugsweise angeschweißt. Diese Bolzen sind, wie aus Fig. 2 ersichtlich, in gegeneinander versetzten Reihen angeordnet. Ihre Länge kann beispielsweise 50 mm, ihr Abstand voneinander 100—200 mm betragen. Die Räume zwischen den einzelnen Bolzen sind, wie aus Fig. 1 zu entnehmen ist, mit verfestigtem Fördergut ausgefüllt, das als eigentlicher Schleiß-Schutz dient. Die Bolzen selbst können, wie in Fig. 2 dargestellt, quadratischen Querschnitt aufweisen, es sind jedoch auch andere Querschnittformen anwendbar.

Mit 8 ist schließlich noch ein Flacheisen bezeichnet, das den unteren Abschluß der Platte 6 bildet und auf dem sich das zwischen den Bolzen befindliche Fördergut in gewissem Umfang abstützt.

## Patentansprüche

1. Pralleinrichtung für das Abwurfende von Bandförderern, Plattenförderern oder dgl. bestehend aus einer senkrecht oder geneigt angeordneten, vom Fördergut beaufschlagten metallischen Platte, dadurch gekennzeichnet, daß auf der Platte (6) eine Vielzahl von zum Fördergut (3) weisenden Bolzen (7) befestigt und derart angeordnet ist, daß die Räume zwischen den Bolzen (7) durch anbackendes und verfestigendes Fördergut ausgefüllt werden können.

2. Pralleinrichtung nach Anspruch 1, dadurch gekennzeichnet, daß die Bolzen (7) in gegeneinander versetzten Reihen angeordnet sind.

3. Pralleinrichtung nach Anspruch 1, dadurch gekennzeichnet, daß ein im wesentlichen horizontal angeordnetes, zum Fördergut weisendes Flacheisen (8), Winkeleisen oder dgl. als unterer Abschluß der Platte (6) vorgesehen ist.

## Claims

1. Baffle device for the discharge end of band or plate conveyors, or the like, this device consisting of a metallic plate, which is arranged vertically or in an inclined position and is struck by the material being conveyed, characterised in that a plurality of bolts (7) are attached to the plate (6), these bolts pointing towards the material (3) being conveyed and they are arranged in such a way that the spaces between the bolts (7) can be filled with the material being conveyed, which bakes on and consolidates.

2. Baffle device according to Claim 1, characterised in that the bolts (7) are arranged in rows which are offset with respect to each other.

3. Baffle device according to Claim 1, characterised in that a flat bar (8) angle-bar, or the like, is provided as the lower termination of the plate (6), this bar being arranged in an essentially horizontal position, pointing towards the material being conveyed.

## Revendications

1. Chicane pour l'extrémité de déversement de bandes transporteuses, de convoyeurs à palettes ou analogues, se composant d'une plaque métallique disposée verticalement ou avec inclinaison et attaquée par la matière transportée, chicane caractérisée par le fait qu'une multiplicité de goujons (7) dirigés vers la matière transportée (3) est fixée et ordonnée sur la plaque (6) de telle sorte que les interstices entre les goujons (7) puissent être comblés par de la matière transportée s'agglomérant et se tassant.

2. Chicane suivant la revendication 1, caractérisée par le fait que les goujons (7) sont disposés en quinconce par rangées.

3. Chicane suivant la revendications 1, caractérisée par le fait qu'un méplat (8), une cornière ou similaire, orienté vers les matières transportées, est prévu en une position essentiellement horizontale pour former la bordure de fermeture inférieure de la plaque (6).

Fig.1

Fig.2